(19) Europäisches Patentamt
European Patent Office
Office européen des brevets

(11) Veröffentlichungsnummer: **0 041 919**
**B1**

(12) # EUROPÄISCHE PATENTSCHRIFT

(45) Veröffentlichungstag der Patentschrift: **21.08.85**

(51) Int. Cl.⁴: **C 09 B 62/04**, D 06 P 3/66

(21) Anmeldenummer: **81810198.2**

(22) Anmeldetag: **25.05.81**

(54) **Verfahren zur Herstellung von Amino-fluor-s-triazin-Farbstoffen.**

(30) Priorität: **30.05.80 CH 4229/80**

(43) Veröffentlichungstag der Anmeldung: **16.12.81 Patentblatt 81/50**

(45) Bekanntmachung des Hinweises auf die Patenterteilung: **21.08.85 Patentblatt 85/34**

(84) Benannte Vertragsstaaten: **CH DE FR GB LI**

(56) Entgegenhaltungen:
**DE - A - 2 756 865**
**FR - A - 2 415 106**

(73) Patentinhaber: **CIBA-GEIGY AG, Postfach, CH-4002 Basel (CH)**

(72) Erfinder: **Deitz, Rolf, Herrengrabenweg 64, CH-4054 Basel (CH)**
Erfinder: **Seiler, Herbert, Dr., Leimgrubenweg 60, CH-4125 Riehen (CH)**

(74) Vertreter: **Zumstein, Fritz sen., Dr. et al, Dr. F. Zumstein sen. Dr. E. Assmann Dipl.-Ing. F. Klingseisen Dr. F. Zumstein jun. Bräuhausstrasse 4, D-8000 München 2 (DE)**

EP 0 041 919 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung ist ein Verfahren zur Herstellung von Farbstoffen der Formel

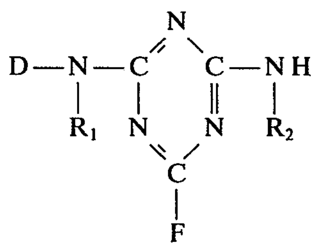

(1)

worin D ein Farbstoffrest, und $R_1$ und $R_2$ unabhängig voneinander Wasserstoff oder $C_{1-4}$-Alkyl ist, dadurch gekennzeichnet, daß man das Cyanurfluorid der Formel

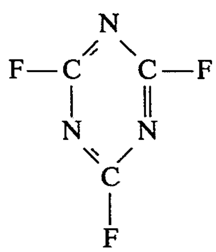

(2)

mit einem Farbstoff der Formel

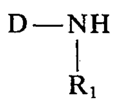

(3)

und mit einem Ammoniumsalz eines Amins der Formel

$$H_2N—R_2 \quad (4)$$

in neutralem bis alkalischem Medium gleichzeitig umsetzt.

Farbstoffe der Formel (1) werden nach bekannten Verfahren (siehe z.B. DE-AS 2 557 141) in der Weise hergestellt, daß man das Cyanurfluorid der Formel (2) mit einem Farbstoff der Formel (3) kondensiert, und das primäre Kondensationsprodukt mit einem Amin der Formel (4) monokondensiert, oder daß man die beiden genannten Kondensationen in umgekehrter Reihenfolge ausführt. Die Kondensationen werden in wäßriger Lösung ausgeführt. Wegen der unterschiedlichen Reaktivitäten der drei Fluoratome am Triazinring wählt man als Reaktionstemperatur für die erste Kondensation 0 bis 5°C, und für die zweite Kondensation, je nach der Art des Restes $R_2$, etwa 0°C bis Raumtemperatur. Die praktische Durchführung gestaltet sich derart, daß man den Aminofarbstoff in wäßriger Lösung vorlegt, das Cyanurfluorid bis zur vollständigen Umsetzung zutropfen läßt, und dann das Amin für die zweite Kondensation zugibt. Bei umgekehrter Reihenfolge der Kondensationen gilt entsprechendes.

Das bekannte Verfahren weist einen Nachteil auf. Da das Amin im Überschuß verwendet wird, steigt bei Zugabe des Amins zu der Reaktionsmischung deren pH-Wert stark an. Dadurch wird die hydrolytische Abspaltung der Fluoratome vom Triazinring begünstigt, infolgedessen wird ein Teil des Difluortriazinfarbstoffes bzw. des Cyanurfluorids »verseift«, und es resultiert eine verminderte Ausbeute.

Wir haben gefunden, daß man den oben erwähnten Nachteil durch das neue, eingangs definierte Verfahren vermeiden kann. Bei diesem Verfahren handelt es sich um ein einstufiges Verfahren, das so ausgeführt wird, daß man den Aminofarbstoff und das Amin in Lösung vorlegt, und das Cyanurfluorid bis zur vollständigen Umsetzung zutropfen läßt. Da zwei Fluoratome des Cyanurfluorids gleichzeitig ausgetauscht werden, arbeitet man von Anfang an zwischen etwa 0°C und Raumtemperatur.

Das neue Verfahren hat den Vorteil, daß es als »Eintropfverfahren«, in einem geschlossenen Reaktionsgefäß ausgeführt werden kann. Es ist daher apparativ einfach, und eine Immission durch das Cyanurfluorid ist ausgeschlossen.

Die verfahrensgemäße Kondensation geschieht momentan, wobei der einheitliche Farbstoff der Formel (1) gebildet wird.

Man hätte erwartet, daß unter den angegebenen Bedingungen das sehr reaktionsfähige Cyanurfluorid beim Eintropfen in die Reaktionsmischung sofort mit irgendeinem Reaktionspartner, Aminofarbstoff

oder Amin, reagiert, so daß eine Mischung von primären Kondensationsprodukten der Formel

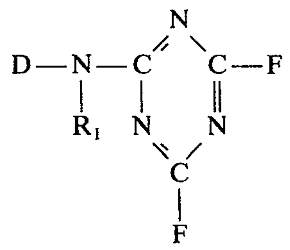

(1a)

und

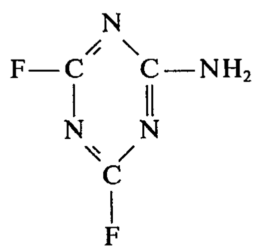

(1b)

entsteht, die nun, wegen der ungünstigen stöchiometrischen Verhältnisse, nur noch sehr träge weiterreagiert. Man hätte ferner erwartet, daß die primären Kondensationsprodukte der oben angegebenen Formeln zum Teil mit dem gleichen Reaktionspartner des Cyanurfluorids wie zu Anfang weiterreagieren, so daß unerwünschte symmetrische Bikondensationsprodukte gebildet werden. Es wäre also zu erwarten gewesen, daß die Reaktion mit erheblicher Verzögerung abläuft, und daß die Ausbeute an dem gewünschten Endprodukt der Formel (1) gegenüber dem konventionellen Verfahren deutlich herabgesetzt ist.

Überraschenderweise zeigt sich, daß dies nicht der Fall ist, daß vielmehr die Reaktionsmischung glatt und schnell reagiert, und daß in einem Arbeitsgang einheitlicher Farbstoff der Formel (1) in guter Ausbeute erhalten wird.

Die erfindungsgemäße Umsetzung kann in organischen Lösungsmitteln, z. B. Diäthyläther oder Aceton, oder in wäßriger Lösung ausgeführt werden. Vorzugsweise geht man so vor, daß man das Cyanurfluorid in eine wäßrige Lösung, die den Aminofarbstoff und das Ammoniumsalz des Amins enthält, eingibt. Das Amin wird aus dem Ammoniumsalz durch laufende Zugabe von Alkali, z. B. Natronlauge, während der Kondensation stetig in Freiheit gesetzt. Eine Ausführungsform ist dadurch gekennzeichnet, daß man den pH-Wert der wäßrigen Lösung auf 7 bis 10, vorzugsweise 8 bis 9, einstellt.

Als Amine der Formel (4) sind zu nennen: Ammoniak, Methylamin, Äthylamin, Propylamin, Isopropylamin, Butylamin, Isobutylamin, sec.-Butylamin und tert.-Butylamin.

Als Ammoniumsalze kommen die Salze anorganischer Säuren in Betracht, vor allem die Chloride, Sulfate, Carbonate und Phosphate. Beispiele von erfindungsgemäß verwendbaren Ammoniumsalzen von Aminen sind: Ammoniumchlorid, Ammoniumsulfat, Ammoniumcarbonat, Methylammoniumchlorid, Methylammoniumsulfat, Äthylammoniumchlorid und $\beta$-Hydroxyäthylammoniumchlorid. Vorzugsweise verwendet man als Amin der Formel (4) das Ammoniak; dieses wird vorzugsweise als Ammoniumchlorid eingesetzt.

Als Farbstoffe der Formel (3) verwendet man vor allem solche, worin der Rest D der Rest eines Farbstoffes der Mono- oder Polyazo-, Metallkomplexazo-, Anthrachinon-, Phthalocyanin-, Formazan-, Dioxazin-, Phenazin- oder Stilbenreihe ist.

Vorzugsweise verwendet man Farbstoffe der Formel (3), worin der Rest D wasserlöslichmachende Gruppen enthält, als Ausgangsstoffe.

Als wasserlöslichmachende Gruppe kommt vor allem die Sulfonsäuregruppe in Betracht.

Der Substituent $R_1$ in Formel (1) bzw. (3) ist als Alkyl mit 1 bis 4 Kohlenstoffatomen: Methyl, Äthyl, Propyl, Isopropyl, Butyl, Isobutyl, sec.-Butyl und tert.-Butyl.

Der Rest eines Farbstoffes D in Formel (1) bzw. (3) kann weitere Substituenten enthalten, als Beispiele seien genannt: Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Halogen, wie Fluor, Chlor und Brom, Nitro, Cyan, Trifluormethyl, Sulfamoyl, Carbamoyl, Ureido, Amino, Hydroxy, Carboxy, Sulfomethyl und Sulfo. Insbesondere enthält der Rest D Sulfonsäuregruppen als Substituenten.

Bevorzugt verwendet man als Farbstoff der Formel (3) einen Aminoazofarbstoff. Insbesondere verwendet man als Ausgangsstoffe Farbstoffe der Formel (3), worin D der Rest eines Mono- oder Disazofarbstoffes ist.

Ferner bevorzugt man Farbstoffe der Formel (3), worin $R_1$ Wasserstoff, Methyl oder Äthyl ist.

Weitere bevorzugte Ausführungsformen sind dadurch gekennzeichnet, daß man einen Aminoazofarbstoff der Formel

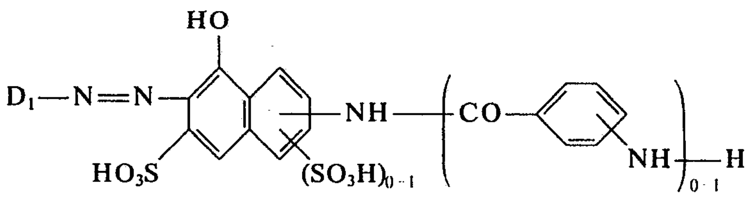

(5)

worin $D_1$ der Rest einer Diazokomponente der Benzol- oder Naphthalinreihe ist, verwendet, insbesondere daß man einen Aminoazofarbstoff der Formel

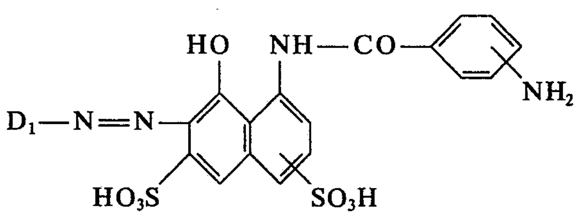

(6)

worin $D_1$ der Rest einer Diazokomponente der Benzol- oder Naphthalinreihe ist, verwendet, und vor allem daß man den Farbstoff der Formel

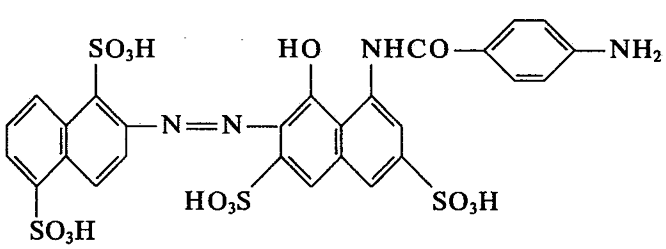

(7)

verwendet.

Als Farbstoffe der Formel (3) kommen besonders Farbstoffe der folgenden Strukturtypen in Betracht:

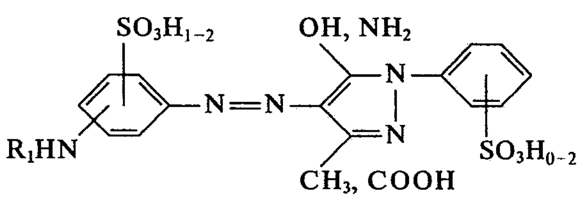

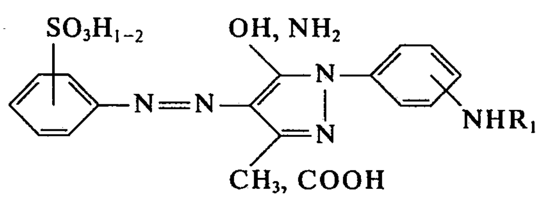

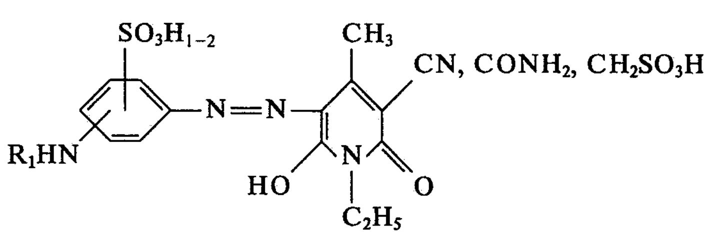

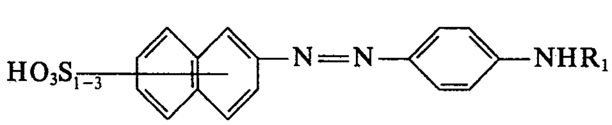

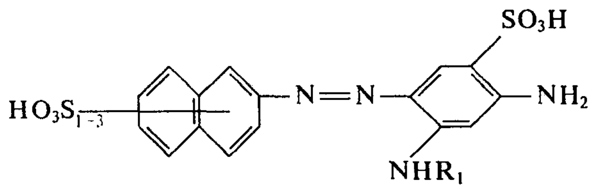

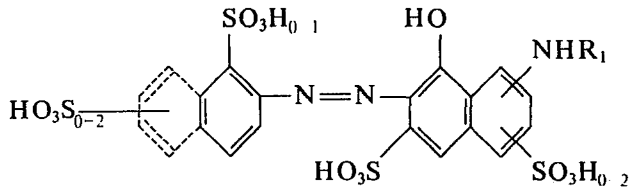

Metallkomplexe von Farbstoffen der Formeln

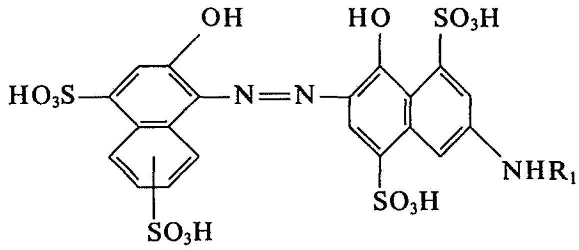

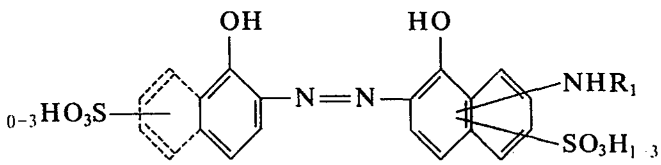

Als Metallatome sind Cu (1 : 1-Komplex) oder Cr und Co (1 : 2-Komplexe) bevorzugt. Cr- und Co-Komplexe können die Azoverbindung der oben angegebenen Formel einmal oder zweimal enthalten, d. h. sie können symmetrisch oder mit beliebigen anderen Ligandengruppierungen unsymmetrisch aufgebaut sein.

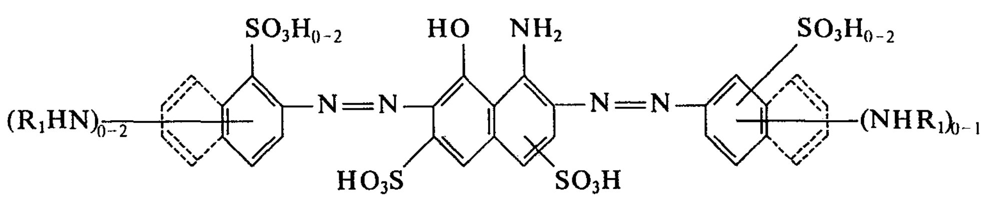

Die durch Strichelungen angedeuteten kondensierten Ringe stehen für alternativ mögliche Naphthalinsysteme.

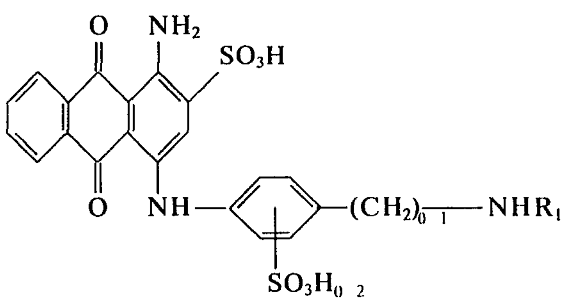

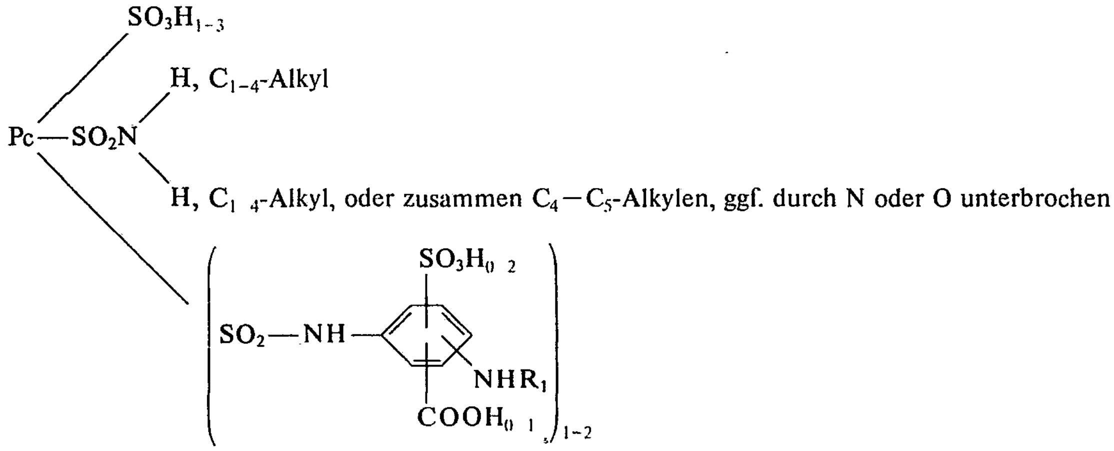

In dieser Formel steht Pc für den Cu- oder Ni-Phthalocyaninrest. Die Gesamtzahl der Substituenten am Pc-Gerüst ist dabei 4.

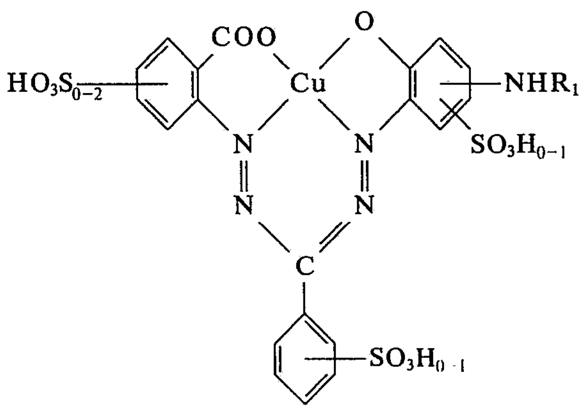

Die Farbstoffe der oben angegebenen Formeln können in den Alkyl- oder Arylresten weitersubstituiert sein, insbesondere durch die bei der Erläuterung von D in Formel (1) bzw. (3) genannten Substituenten.

Besonders wichtige Azoffarbstoffe der Formel (3) sind die folgenden:

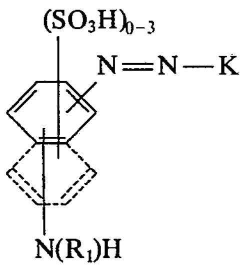

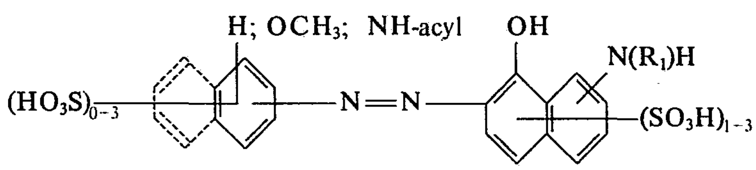

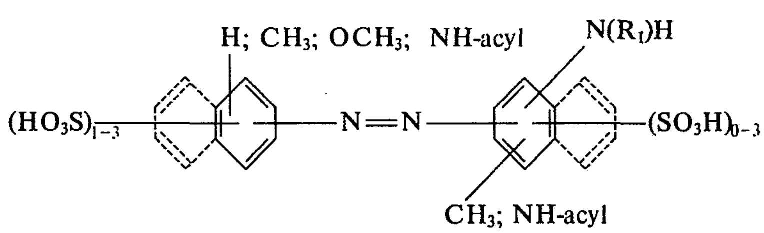

und

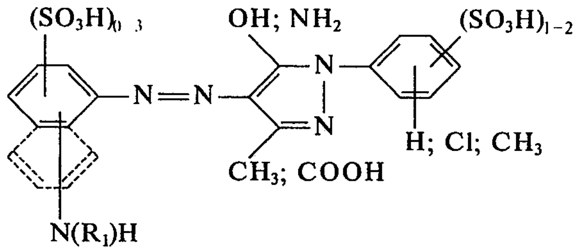

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und $R_1$ die bei der Erläuterung der Formel (1) angegebene Bedeutung hat, sowie die Metallkomplex Azofarbstoffe der Formeln

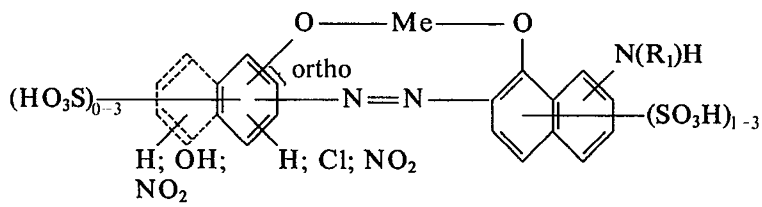

und

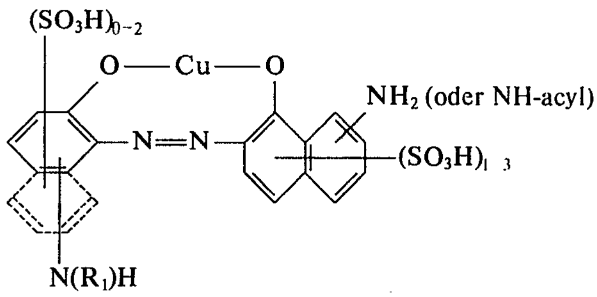

worin $R_1$ und acyl die oben angegebenen Bedeutungen haben und Me für Cu, Cr oder Co steht.

Bei der Herstellung der bevorzugten Reaktivfarbstoffe der Formel (1), worin D der Rest eines Azofarbstoffes, insbesondere eines Mono- oder Disazofarbstoffes, ist, erfolgt die Diazotierung der eine diazotierbare Aminogruppe enthaltenden Zwischenprodukte in der Regel durch Einwirkung salpetriger Säure in wäßrig-mineralsaurer Lösung bei tiefer Temperatur, die Kupplung bei schwach sauren, neutralen bis schwach alkalischen pH-Werten.

Die Kondensation des Cyanurfluorids der Formel (2) mit den Farbstoffen der Formel (3) und den Aminen der Formel (4) erfolgen vorzugsweise in wäßriger Lösung oder Suspension, bei niedriger Temperatur und bei neutralem bis alkalischem pH-Wert, und so, daß im fertigen Farbstoff der Formel (1) ein Fluoratom als abspaltbarer Rest übrigbleibt. Vorteilhaft wird der bei der Kondensation freiwerdende Fluorwasserstoff laufend durch Zugabe wäßriger Alkalihydroxyde, -carbonate oder -bicarbonate neutralisiert.

Falls die Reaktivfarbstoffe der Formel (1), worin D der Rest eines Azofarbstoffes ist in ortho-ortho'-Stellung zur Azogruppe komplexbildende Gruppen, z. B. Hydroxy- oder Carboxygruppen, enthalten, können auch Metallkomplexe der Azofarbstoffe der Formel (1) hergestellt werden, indem man die erfindungsgemäß erhaltenen Azoverbindungen, welche in ortho-ortho'-Stellung zur Azogruppe komplexbildende Gruppen enthalten, vor oder gegebenenfalls auch nach der Kondensation mit dem Cyanurfluorid der Formel (2) mit metallabgebenden Mitteln behandelt.

Von besonderem Interesse sind Kupferkomplexe von Azofarbstoffen der Formel (1). Als Methode der Metallisierung kommt außer der oben genannten auch die entalylierende Metallisierung und, für die Herstellung von Kupferkomplexen, die oxydative Kupferung in Betracht.

Die Farbstoffe der Formel (1) sind faserreaktiv, da sie im s-Triazinrest ein abspaltbares Fluoratom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) zeichnen sich durch hohe Reaktivität aus, und sie ergeben Färbungen mit guten Naß- und Lichtechtheiten. Sie weisen ferner ein gutes Fixiervermögen auf und ergeben Färbungen von bemerkenswert hoher Farbstärke.

Die Reaktivfarbstoffe der Formel (1) eignen sich zum Färben und Bedrucken der verschiedensten Materialien, wie Seide, Leder, Wolle, Superpolyamidfasern und Superpolyamidurethanen, insbesondere aber cellulosehaltige Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1

75,2 Teile des Farbstoffes der Formel

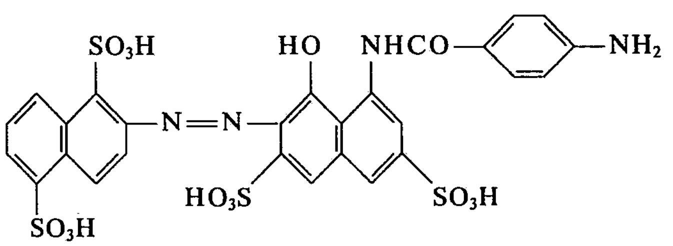

werden bei 20°C in 700 Teilen Wasser neutral gelöst. Nach Zugabe von 5,6 Teilen Ammoniumchlorid wird die Reaktionslösung auf 0 bis 5°C gekühlt und mit 2,5 Vol.-Teilen Natronlauge 2N auf einen pH-Wert von 8,5 gestellt.

Unter sehr gutem Rühren werden innert 35 Minuten 14,2 Teile Cyanurfluorid zugetropft. Man läßt die Temperatur auf 20°C ansteigen und hält durch Zugabe von 147 Vol.-Teilen Natronlauge 2N den pH-Wert bei 8,5. Nach beendigter Reaktion wird die Farbstofflösung mit 2,8 Vol.-Teilen Salzsäure 1 N auf einen pH-Wert von 7,5 gestellt. Der Reaktivfarbstoff der Formel

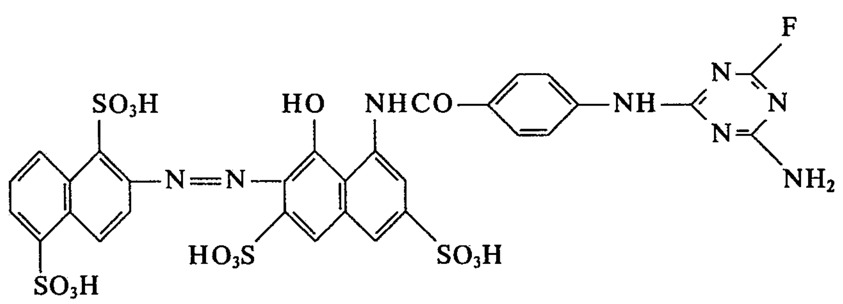

wird nun durch Einstreuen von Kaliumchlorid ausgesalzen, filtriert, gewaschen und im Vakuum getrocknet. Er stellt ein rotes Pulver dar und färbt Baumwolle und Regeneratcellulose in blaustichigen Rottönen.

Farbstoffe mit ähnlichen Eigenschaften werden erhalten, wenn man die in der nachfolgenden Tabelle 1 in der Spalte 2 aufgeführten Aminofarbstoffe mit äquivalenten Teilen Cyanurfluorid in Gegenwart von Ammoniumsalzen gemäß den Angaben des Beispiels 1 kondensiert. Als Ammoniumsalze können beispielsweise äquivalente Teile von

Ammoniumbromid
Ammoniumcarbonat
Ammoniumfluorid
Ammoniumhydrogencarbonat
Ammoniumhydrogensulfat
Ammoniumnitrat

prim. Ammoniumphosphat
sec. Ammoniumphosphat
Ammoniumsulfat

verwendet werden.

Verwendet man anstelle der in Beispiel 1 erwähnten 5,6 Teile Ammoniumchlorid äquivalente Teile eines der nachfolgend aufgeführten Ammoniumsalze, wie

Methylamin-hydrochlorid
Dimethylamin-hydrochlorid
Äthylamin-hydrochlorid
Diäthylamin-hydrochlorid
Propylamin-hydrochlorid
Isopropylamin-hydrochlorid
Butylamin-hydrochlorid
Isobutylamin-hydrochlorid
sec. Butylamin-hydrochlorid

so werden die gleichen Ergebnisse erzielt und man erhält die dem angewandten Amin entsprechend substituierten Farbstoffe.

Tabelle

| N° | Aminofarbstoff | Farbton auf Cellulose |
|---|---|---|
| 2 | 1-Amino-3-acetylaminobenzol-6-sulfonsäure → 1-Äthyl-3-sulfomethyl-4-methyl-6-hydroxy-pyridon-(2)-5-carbonsäureamid (verseift) | gelb |
| 3 | 2-Amino-1-sulfo-5-aminomethyl-naphthalin → 1-Äthyl-3-aminocarbonyl-4-methyl-6-hydroxypyridon-(2) (verseift) | gelb |
| 4 | 2-Amino-5-aminomethyl-1,7-disulfonaphthalin → 1-Äthyl-3-aminocarbonyl-4-methyl-6-hydroxypyridon-(2) (verseift) | gelb |
| 5 | 1-Amino-3-acetylaminobenzol-6-sulfonsäure → 1-(4′-Sulfophenyl)-3-methyl-pyrazolon-5 (verseift) | gelb |
| 6 | 1-Amino-3-acetylaminobenzol-6-sulfonsäure → 1-(4′-Sulfophenyl)-3-carboxy-pyrazolon-5 (verseift) | gelb |
| 7 | 1-Amino-3-acetylaminobenzol-6-sulfonsäure → 1-(2′,5′-Dichlor-4′-sulfophenyl)-3-methylpyrazolon-5 (verseift) | gelb |
| 8 | 1-Amino-3-acetylaminobenzol-6-sulfonsäure → 1-(2′,5′-Disulfophenyl)-3-methylpyrazolon-5 (verseift) | gelb |
| 9 | 1-Aminobenzol-2,5-disulfonsäure → 1-(3′-Aminophenyl)-3-methylpyrazolon-5 | gelb |
| 10 | 1-Amino-3-acetylaminobenzol-6-sulfonsäure → 1-(4′,8′-Disulfonaphthyl-2′)-3-methylpyrazolon-5 (verseift) | gelb |
| 11 | 1-Amino-3-acetylaminobenzol-6-sulfonsäure → 1-(2′-Methyl-4′-sulfophenyl)-3-carboxy-pyrazolon-5 (verseift) | gelb |
| 12 | 1-Amino-3-acetylaminobenzol-6-sulfonsäure → 1-(3′-Sulfophenyl)-3-methyl-pyrazolon-5 (verseift) | gelb |
| 13 | 1-Amino-3-acetylaminobenzol-6-sulfonsäure → 1-Carboxymethyl-5-pyrazolon-3-carbonsäure (verseift) | gelb |

Fortsetzung

| N° | Aminofarbstoff | Farbton auf Cellulose |
|---|---|---|
| 14 | 1-Amino-4-nitrobenzol-2-sulfonsäure<br>→ 4-Amino-3,5-disulfoacetessigsäureanilid (reduziert) | gelb |
| 15 | 1-Amino-4-acetylaminobenzol<br>→ 1-(2',5'-Disulfophenyl)-3-methyl-pyrazolon-5 (verseift) | rotstichig gelb |
| 16 | 1-Aminobenzol-2,4-disulfonsäure<br>→ 3-Aminophenylharnstoff | rotstichig gelb |
| 17 | 2-Aminonaphthalin-4,8-disulfonsäure<br>→ 1-Amino-3-acetylaminobenzol | rotstichig gelb |
| 18 | 2-Aminonaphthalin-6,8-disulfonsäure<br>→ 1-Amino-3-acetylaminobenzol | rotstichig gelb |
| 19 | 2-Aminonaphthalin-3,6,8-trisulfonsäure<br>→ Aminophenylharnstoff | rotstichig gelb |
| 20 | 2-Aminonaphthalin-4,6,8-trisulfonsäure<br>→ 1-Amino-3-methylbenzol | rotstichig gelb |
| 21 | 2-Aminonaphthalin-3,6,8-trisulfonsäure<br>→ 1-Amino-3-acetylaminobenzol | rotstichig gelb |
| 22 | 1-Aminobenzol-2,4-disulfonsäure<br>→ 1-Aminonaphthalin-6-sulfonsäure<br>→ 1-Amino-3-methylbenzol | braun |
| 23 | 2-Aminonaphthalin-4,8-trisulfonsäure<br>→ 1-Aminonaphthalin-6-sulfonsäure<br>→ 1-Amino-3-methylbenzol | braun |
| 24 | 2-Aminonaphthalin-2,5,7-trisulfonsäure<br>→ 1-Aminonaphthalin-6-sulfonsäure<br>→ 1-Aminonaphthalin-6-sulfonsäure | braun |
| 25 | 1-Amino-4-acetylaminobenzol-2-sulfonsäure<br>→ 1-Hydroxy-7-(3'-sulfophenylamino)-nahpthalin-3-sulfonsäure (verseift) | braun |
| 26 | 1-Amino-3-acetylaminobenzol-6-sulfonsäure<br>→ 2-Hydroxynaphthalin-6,8-disulfonsäure (verseift) | orange |
| 27 | 1-Amino-3-acetylaminobenzol-6-sulfonsäure<br>→ 2-Aminonaphthalin-5,7-disulfonsäure (verseift) | orange |
| 28 | 1-Aminobenzol-2-sulfonsäure<br>→ 2-N-Methyl-N-acetylamino-5-hydroxynaphthalin-7-sulfonsäure (verseift) | orange |
| 29 | 1-Aminobenzol-2,5-disulfonsäure<br>→ 2-Acetylamino-5-hydroxynaphthalin-7-sulfonsäure (verseift) | orange |
| 30 | 2-Aminonaphthalin-1,7-disulfonsäure<br>→ 2-Acetylamino-5-hydroxynaphthalin-7-sulfonsäure (verseift) | orange |
| 31 | 2-Aminonaphthalin-1,5,7-trisulfonsäure<br>→ 2-Acetylamino-5-hydroxynaphthalin-7-sulfonsäure (verseift) | orange |

Fortsetzung

| N° | Aminofarbstoff | Farbton auf Cellulose |
|---|---|---|
| 32 | 2-Aminonaphthalin-3,6,8-trisulfonsäure → 2-Acetylamino-5-hydroxynaphthalin-7-sulfonsäure (verseift) | orange |
| 33 | 2-Aminonaphthalin-1,7-disulfonsäure → 2-Acetylamino-8-hydroxynaphthalin-6-sulfonsäure (verseift) | scharlach |
| 34 | 2-Aminonaphthalin-1,5-disulfonsäure → 2-Acetylamino-8-hydroxynaphthalin-6-sulfonsäure (verseift) | scharlach |
| 35 | 2-Aminonaphthalin-1,5-disulfonsäure → 2-Acetylamino-5-hydroxynaphthalin-7-sulfonsäure (verseift) | orange |
| 36 | 1-Amino-4-methoxybenzol-2,5-disulfonsäure → 2-Acetylamino-5-hydroxynaphthalin-7-sulfonsäure (verseift) | scharlach |
| 37 | 1-Amino-4-methylbenzol-2,5-disulfonsäure → 2-Acetylamino-5-hydroxynaphthalin-7-sulfonsäure (verseift) | orange |
| 38 | 2-Aminonaphthalin-4,6,8-trisulfonsäure → 1-Aminobenzol → 1-Aminobenzol | orange |
| 39 | 1-Aminobenzol-2,5-disulfonsäure → 1-Acetylamino-8-hydroxynaphthalin-3,6-disulfonsäure (verseift) | rot |
| 40 | 2-Aminonaphthalin-1,5-disulfonsäure → 1-Acetylamino-8-hydroxynaphthalin-3,6-disulfonsäure (verseift) | rot |
| 41 | 1-Aminobenzol-2,4-disulfonsäure → 1-(4'-Nitrobenzoylamino)-8-hydroxynaphthalin-3,6-disulfonsäure (reduziert) | rot |
| 42 | 1-Aminobenzol-2,5-disulfonsäure → 1-(3'-Nitrobenzoylamino)-8-hydroxynaphthalin-3,6-disulfonsäure (reduziert) | rot |
| 43 | 1-Aminobenzol-2,4-disulfonsäure → 1-(4'-Nitrobenzoylamino)-8-hydroxynaphthalin-4,6-disulfonsäure (reduziert) | rot |
| 44 | 2-Aminonaphthalin-1,5,7-trisulfonsäure → 1-(4'-Nitrobenzoylamino)-8-hydroxynaphthalin-3,6-disulfonsäure (reduziert) | rot |
| 45 | 2-Aminonaphthalin-1,5-disulfonsäure → 1-(4'-Nitrobenzoylamino)-8-hydroxynaphthalin-4,6-disulfonsäure (reduziert) | rot |
| 46 | 2-Aminonaphthalin-1,5,7-trisulfonsäure → 1-(3'-Nitrobenzoylamino)-8-hydroxynaphthalin-4,6-disulfonsäure (reduziert) | rot |
| 47 | 2-Amino-1-sulfo-5-aminomethyl-naphthalin → 1-Acetylamino-8-hydroxynaphthalin-3,6-disulfonsäure | rot |
| 48 | 2-Amino-1-sulfo-5-aminomethyl-naphthalin → 1-Benzoylamino-8-hydroxynaphthalin-3,6-disulfonsäure | rot |

Fortsetzung

| N° | Aminofarbstoff | Farbton auf Cellulose |
|---|---|---|
| 49 | 2-Amino-1-sulfo-5-aminomethyl-naphthalin → 1-Acetylamino-8-hydroxynaphthalin-4,6-disulfonsäure | rot |
| 50 | 2-Amino-1,7-disulfo-5-aminomethyl-naphthalin → 1-Benzoylamino-8-hydroxynaphthalin-3,6-disulfonsäure | rot |
| 51 | 2-Amino-1,5-disulfo-5-aminomethyl-naphthalin → 1-Benzoylamino-8-hydroxynaphthalin-4,6-disulfonsäure | rot |
| 52 | 1-Aminobenzol-2,4-disulfonsäure (saure Kuppl.) → 1-Amino-8-hydroxynaphthalin-3,6-disulfonsäure ← (alk. Kuppl.) 1-Amino-3-acetylaminobenzol-6-sulfonsäure (verseift) | blau |
| 53 | N-(2-Carboxy-5-sulfophenyl)-N'-(2'-hydroxy-3'-amino-5'-sulfophenyl)-ms-phenyl-formazan Cu-Komplex | blau |
| 54 | N-(2-Carboxy-5-sulfophenyl)-N'-(2'-hydroxy-3'-amino-5'-sulfophenyl)-ms-(4"-sulfophenyl)-formazan Cu-Komplex | blau |
| 55 | N-(2-Carboxy-5-sulfophenyl)-N'-(2'-hydroxy-3',5'-disulfophenyl)-ms-(3"-aminophenyl)-formazan Cu-Komplex | blau |
| 56 | N-(2-Carboxy-4-sulfophenyl)-N'-(2'-hydroxy-5'-amino-3'-sulfophenyl)-ms-(4"-sulfophenyl)-formazan Cu-Komplex | blau |
| 57 | N-(2-Carboxy-4-aminophenyl)-N'-(2'-hydroxy-3',5'-disulfophenyl)-ms-(3"-sulfophenyl)-formazan Cu-Komplex | blau |
| 58 | N-(2-Carboxy-4-aminophenyl)-N'-(2'-hydroxy-3',5'-disulfophenyl)-ms-(2"-sulfophenyl)-formazan Cu-Komplex | blau |
| 59 | N-(2-Hydroxy-3-amino-5-sulfophenyl)-N'-(2'-hydroxy-4'-sulfophenyl)-ms-(2"-sulfophenyl)-formazan Cu-Komplex | blau |
| 60 | N-(2-Hydroxy-3-amino-5-sulfophenyl)-N'-(2'-hydroxy-3',5'-disulfophenyl)-ms-phenylformazan Cu-Komplex | blau |
| 61 | N-(2-Hydroxy-5-sulfophenyl)-N'-(2'-hydroxy-3',5'-disulfophenyl)-ms-(4"-aminophenyl)-formazan Cu-Komplex | blau |
| 62 | N-(2-Hydroxy-3-amino-5-sulfophenyl)-N'-(2'-hydroxy-3',5'-disulfophenyl)-ms-(4"-sulfophenyl)formazan Cu-Komplex | blau |
| 63 | N-(2-Hydroxy-5-amino-3-sulfophenyl)-N'-(2',5'-disulfophenyl)-ms-phenyl-formazan Cu-Komplex | blau |
| 64 | N-(2-Hydroxy-4,6-disulfophenyl)-N'-(2',4'-disulfophenyl)-ms-(3"-aminophenyl)-formazan Cu-Komplex | blau |
| 65 | 1-Diazo-2-hydroxy-6-nitronaphthalin-4-sulfonsäure → 1-Amino-8-hydroxynaphthalin-2,4-disulfonsäure (reduziert) Cu-Komplex | blau |
| 66 | 1-Diazo-2-hydroxy-6-nitronaphthalin-4-sulfonsäure → 1-Hydroxynaphthalin-4,8-disulfonsäure (reduziert) Cu-Komplex | violett |

Fortsetzung

| N° | Aminofarbstoff | Farbton auf Cellulose |
|---|---|---|
| 67 | 2-Aminonaphthalin-4,6,8-trisulfonsäure → 2-Hydroxy-6-acetylaminonaphthalin-4-sulfonsäure, oxydierend gekupfert (verseift) | rotstichig blau |
| 68 | 1-Diazo-2-hydroxy-6-nitronaphthalin-4-sulfonsäure → 1-Benzoylamino-8-hydroxynaphthalin-3,6-disulfonsäure (reduziert) Cu-Komplex | blaustichig violett |
| 69 | 2-Amino-4,6,8-trisulfonsäure → 2-Acetylamino-5-hydroxynaphthalin-7-sulfonsäure, oxydierend gekupfert (verseift) | violett |
| 70 | 2-Aminonaphthalin-4,8-disulfonsäure → 2-Acetylamino-5-hydroxynaphthalin-4,8-disulfonsäure, oxydierend gekupfert (verseift) | blaustichig violett |
| 71 | 2-Aminonaphthalin-6,8-disulfonsäure → 2-Acetylamino-5-hydroxynaphthalin-7-sulfonsäure, oxydierend gekupfert (verseift) | bordo |
| 72 | 2-Aminonaphthalin-4,8-disulfonsäure → 1-Amino-8-hydroxynaphthalin-3,6-disulfonsäure, oxydierend gekupfert | blau |
| 73 | 1-Amino-4-acetylaminobenzol-2-sulfonsäure → 1-Amino-2-methoxy-5-methylbenzol → 1-Hydroxynaphthalin-3,6,8-trisulfonsäure, entmethylierend gekupfert (verseift) | marineblau |
| 74 | 1-Hydroxy-2-aminobenzol-4,6-disulfonsäure → 2-Amino-5-hydroxynaphthalin-7-sulfonsäure Cu-Komplex | rubin |
| 75 | 1-Hydroxy-2-aminobenzol-4,6-disulfonsäure → 2-Amino-8-hydroxynaphthalin-6-sulfonsäure Cu-Komplex | rubin |
| 76 | 1-Hydroxy-2-aminobenzol-4,6-disulfonsäure → 2-(4'-Aminophenylamino)-5-hydroxynaphthalin-7-sulfonsäure Cu-Komplex | violett |
| 77 | 1-Hydroxy-2-aminobenzol-5-sulfonsäure → 2-Amino-8-hydroxynaphthalin-3,6-disulfonsäure Cu-Komplex | violett |
| 78 | 1-Hydroxy-2-amino-4-chlorbenzol-5-sulfonsäure → 2-Methylamino-8-hydroxynaphthalin-6-sulfonsäure Cu Komplex | violett |
| 79 | 1-Hydroxy-2-amino-4-acetylaminobenzol-6-sulfonsäure → Amino-8-hydroxynaphthalin-2,4-disulfonsäure Cu-Komplex (verseift) | blau |
| 80 | 1-Amino-4-(3'-amino-4'-sulfophenylamino)-anthrachinon-2-sulfonsäure | blau |
| 81 | 1-Amino-4-(4'-amino-3'-sulfophenylamino)-anthrachinon-2-sulfonsäure | blau |
| 82 | 1-Amino-4-(3'-amino-4'-sulfophenylamino)-anthrachinon-2,7-disulfonsäure | blau |

Fortsetzung

| N° | Aminofarbstoff | Farbton auf Cellulose |
|---|---|---|
| 83 | 1-Amino-4-(4′-amino-3′-sulfophenylamino)-anthrachinon-2,7-disulfonsäure | blau |
| 84 | 1-Amino-4-(4′-amino-2′-sulfophenylamino)-anthrachinon-2,6-disulfonsäure | blau |
| 85 | 1-Amino-4-(4′-amino-3′-sulfophenylamino)-anthrachinon-2,6-disulfonsäure | blau |
| 86 | 1-Amino-4-(3′-amino-2′-methyl-5′-sulfophenylamino)-anthrachinon-2-sulfonsäure | blau |
| 87 | 1-Amino-4-(4′-amino-cyclohexylamino)-anthrachinon-2,6-disulfonsäure | blau |
| 88 | 1-Amino-4-(3′-amino-2′-methyl-5′-sulfophenylamino)-anthrachinon-2,6-disulfonsäure | blau |
| 89 | 1-Amino-4-(4′-methylamino-2′-sulfophenylamino)-anthrachinon-2,7-disulfonsäure | blau |
| 90 | 1-Amino-4-(3′-aminomethyl-2′,6′-dimethyl-5-sulfophenylamino)-anthrachinon-2,6-disulfonsäure | blau |
| 91 | 1-Amino-4-(3′-amino-2′-methyl-5′-sulfophenylamino)-anthrachinon-2,5-disulfonsäure | blau |
| 92 | 1-Amino-4-(2′-aminomethyl-4′-methyl-6′-sulfophenylamino)-anthrachinon-2-sulfonsäure | blau |
| 93 | CuPc (3) $-(SO_3H)_2$<br>$-(SO_2NH_2)_1$<br>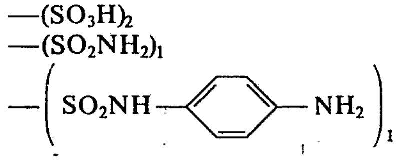 | türkisblau |
| 94 | CuPc (3) $-(SO_3H)_2$<br>$-(SO_2NH_2)_1$<br>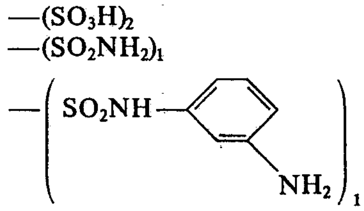 | türkisblau |
| 95 | CuPc (3) $-(SO_3H)_3$<br>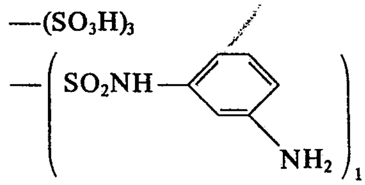 | türkisblau |
| 96 | CuPc (3) $-(SO_3H)_2$<br>$-(SO_2NH_2)_1$<br>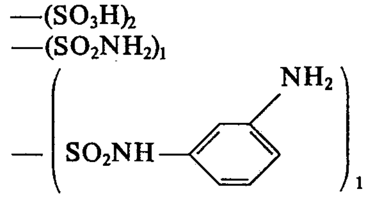 | türkisblau |

Fortsetzung

| N° | Aminofarbstoff | Farbton auf Cellulose |
|---|---|---|
| 97 | NiPc (3) —$(SO_3H)_3$<br>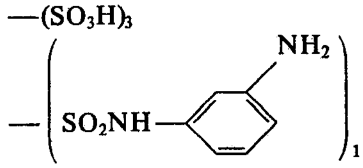 | grünstichig blau |
| 98 | NiPc (3) —$(SO_3H)_3$<br>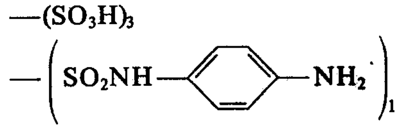 | grünstichig blau |
| 99 | CuPc (3) $(SO_3H)_2$<br>—$(SO_2NH_2)_1$<br>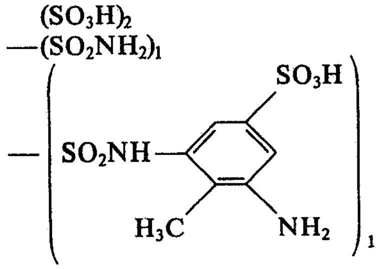 | türkisblau |
| 100 | CuPc (3) —$(SO_3H)_3$<br>—$(SO_2NHCH_2CH_2NH_2)_1$ | türkisblau |
| 101 | CuPc (3) —$(SO_3H)_2$<br>—$(SO_2NH_2)_1$<br>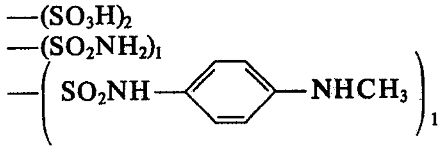 | türkisblau |
| 102 | CuPc (3) —$(SO_3H)_2$<br>—$(SO_2NH_2)_1$<br>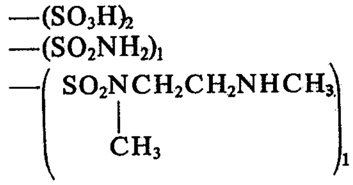 | türkisblau |
| 103 | CuPc (3) —$(SO_3H)_2$<br>—$(SO_2NH_2)_1$<br>—$(SO_2NH(CH_2)_4NH_2)_1$ | türkisblau |
| 104 | CuPc (3) —$(SO_3H)_2$<br>—$(SO_2NH_2)_1$<br>—$(SO_2NHCH_2CH_2NH_2)_1$ | türkisblau |
| 105 | CuPc (3) —$(SO_3H)_3$<br>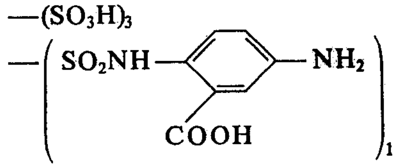 | türkisblau |
| 106 | CuPc (3) —$(SO_3H)_2$<br>—$(SO_2NH_2)_1$<br>—$(SO_2NH(CH_2)_3NHCH_3)_1$ | türkisblau |

Färbevorschrift I

2 Teile des gemäß Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so daß es um 75 % seines Gewichtes zunimmt, und dann getrocknet.

Danach imprägniert man das Gewebe mit einer 20° warmen Lösung, die pro Liter 5 Gramm Natriumhydroxyd und 300 Gramm Natriumchlorid enthält, quetscht auf 75 %Gewichtszunahme ab, dämpft die Färbung während 30 Sekunden bei 100 bis 101°, spült, seift während einer Viertelstunde in einer 0,3 %igen kochenden Lösung eines ionenfreien Waschmittels, spült und trocknet.

Färbevorschrift II

2 Teile des gemäß Beispiel 1 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°, wobei nach 30 Minuten 40 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3 %igen kochenden Lösung eines ionenfreien Waschmittels, spült und trocknet.

**Patentansprüche**

1. Verfahren zur Herstellung von Farbstoffen der Formel

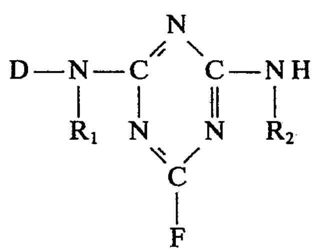

(1)

worin D ein Farbstoffrest, und $R_1$ und $R_2$ unabhängig voneinander Wasserstoff oder $C_{1-4}$-Alkyl ist, dadurch gekennzeichnet, daß man das Cyanurfluorid der Formel

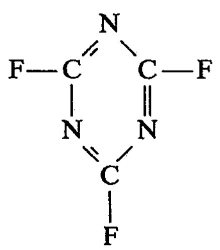

(2)

mit einem Farbstoff der Formel

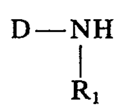

(3)

und mit einem Ammoniumsalz eines Amins der Formel

$$H_2N—R_2 \qquad (4)$$

in neutralem bis alkalischem Medium gleichzeitig umsetzt.

2. Verfahren gemäß Anspruch 1, dadurch gekennzeichnet, daß man das Cyanurfluorid in eine wäßrige Lösung, die den Aminofarbstoff und das Ammoniumsalz des Amins enthält, eingibt.

3. Verfahren gemäß Anspruch 2, dadurch gekennzeichnet, daß man den pH-Wert der wäßrigen Lösung auf 7 bis 10 einstellt.

4. Verfahren gemäß Anspruch 3, dadurch gekennzeichnet, daß man den pH-Wert der wäßrigen Lösung auf 8 bis 9 einstellt.

5. Verfahren gemäß einem der Ansprüche 1 bis 4, dadurch gekennzeichnet, daß man als Amin der Formel (4) das Ammoniak verwendet und dieses als Ammoniumchlorid einsetzt.

6. Verfahren gemäß einem der Ansprüche 1 bis 5, dadurch gekennzeichnet, daß man als Farbstoff der Formel (3) einen Aminoazofarbstoff verwendet.

7. Verfahren gemäß Anspruch 6, dadurch gekennzeichnet, daß man einen Aminoazofarbstoff der Formel

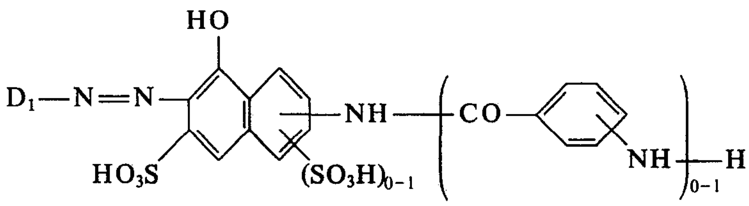

(5)

worin $D_1$ der Rest einer Diazokomponente der Benzol- oder Naphthalinreihe ist, verwendet.

8. Verfahren gemäß Anspruch 7, dadurch gekennzeichnet, daß man ein Aminoazofarbstoff der Formel

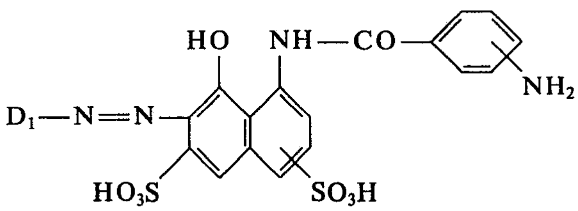

(6)

worin $D_1$ die in Anspruch 7 angegebene Bedeutung verwendet.

9. Verfahren gemäß Anspruch 8, dadurch gekennzeichnet, daß man den Farbstoff der Formel

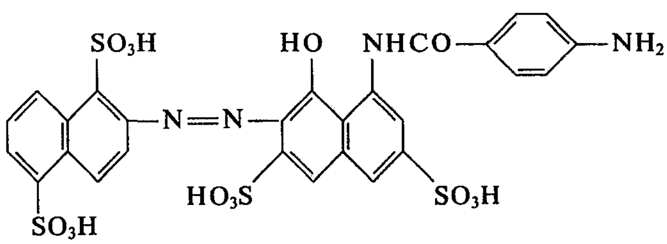

(7)

verwendet.

**Claims**

1. A process for the preparation of a dye of the formula

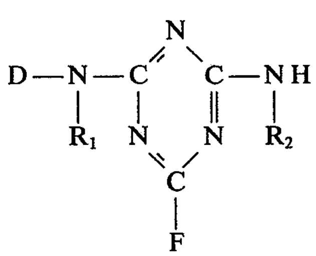

(1)

in which D is a dye radical and $R_1$ and $R_2$ are each independently of the other hydrogen or $C_{1-4}$ alkyl, which process comprises reacting cyanuric fluoride of the formula

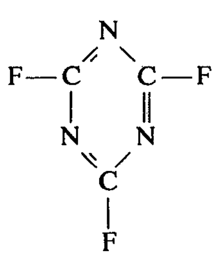

(2)

simultaneously with a dye of the formula

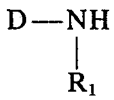

(3)

and with an ammonium salt of an amine of the formula

$$H_2N—R_2 \quad (4)$$

in a neutral to alkaline medium.

2. A process according to claim 1, wherein cyanuric fluoride is added to an aqueous solution containing the amino dye the ammonium salt of the amine.

3. A process according to claim 2, wherein the pH value of the aqueous solution is adjusted to 7 to 10.

4. A process according to claim 3, wherein the pH value of the aqueous solution is adjusted to 8 to 9.

5. A process according to any one of claims 1 to 4, wherein ammonia in the form of ammonium chloride is used as the amine of formula (4).

6. A process according to any one of claims 1 to 5, wherein an aminoazo dye is used as the dye of the formula (3).

7. A process according to claim 6, which comprises the use of an aminoazo dyes of the formula

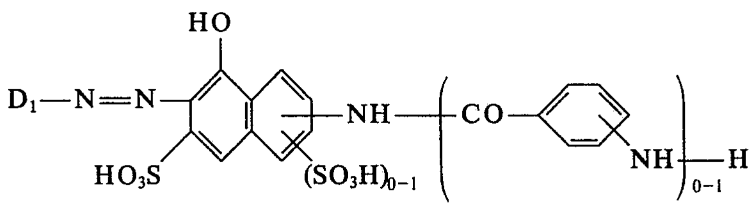

(5)

in which $D_1$ is the radical of a diazo component of the benzene or naphthalene series.

8. A process according to claim 7, which comprises the use of an aminoazo dye of the formula

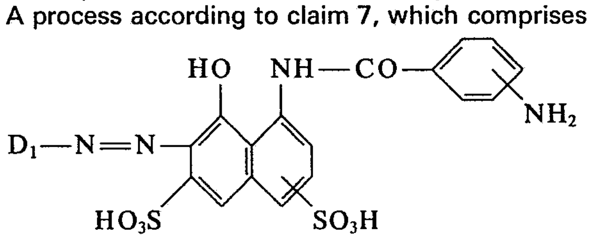

(6)

in which $D_1$ is as defined in claim 7.

9. A process according to claim 8, which comprises the use of the dye of the formula

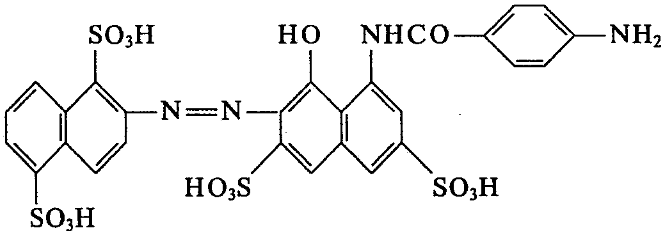

(7)

**Revendications**

1. Procédé pour la préparation de colorants de formule

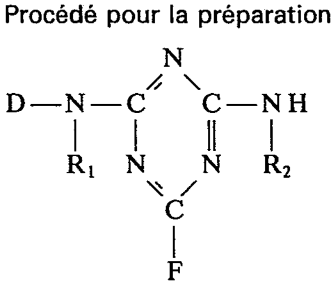

(1)

dans laquelle D est un résidu de colorant, et $R_1$ et $R_2$, indépendamment l'un de l'autre, représentent chacun un atome d'hydrogène ou un groupe alkyle en $C_{1-4}$, caractérisé par le fait que l'on fait réagir simultanément le fluorure de cyanuryle de formule

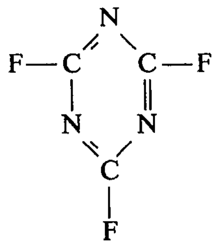

(2)

avec un colorant de formule

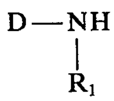

(3)

et avec un sel d'ammonium d'une amine de formule

$$H_2N—R_2 \qquad (4)$$

en milieu allant de la neutralité à l'alcalinité.

2. Procédé selon la revendication 1, caractérisé par le fait que l'on introduit le fluorure de cyanuryle dans une solution aqueuse qui contient le colorant amino et le sel d'ammonium de l'amine.

3. Procédé selon la revendication 2, caractérisé par le fait que l'on ajuste le pH de la solution aqueuse à une valeur allant de 7 à 10.

4. Prodédé selon la revendication 3, caractérisé par le fait que l'on ajuste le pH de la solution aqueuse à une valeur allant de 8 à 9.

5. Procédé selon l'une des revendications 1 à 4, caractérisé par le fait que l'on utilise comme amine de formule (4) l'ammoniac et que l'on introduit celui-ci en tant que chlorure d'ammonium.

6. Prodédé selon l'une des revendications 1 à 5, caractérisé par le fait que l'on utilise en tant que colorant de formule (3) un colorant amino-azoïque.

7. Procédé selon la revendication 6, caractérisé par le fait que l'on utilise un colorant amino-azoïque de formule

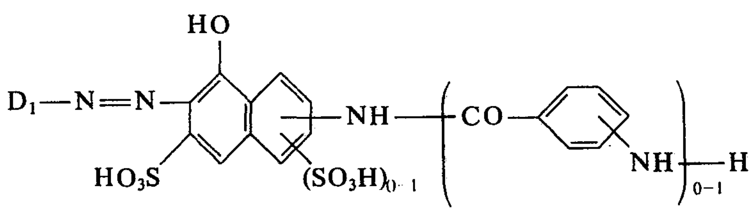

(5)

dans laquelle $D_1$ est le résidu d'un composant diazoïque de la série du benzène ou de la série du naphtalène.

8. Procédé selon la revendication 7, caractérisé par le fait que l'on utilise un colorant amino-azoïque de formule

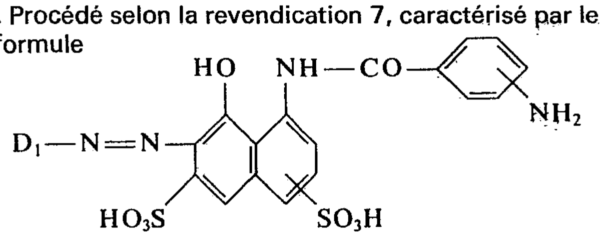

(6)

dans laquelle $D_1$ a la signification donnée dans la revendication 7.

9. Procédé selon la revendication 8, caractérisé par le fait que l'on utilise le colorant de formule

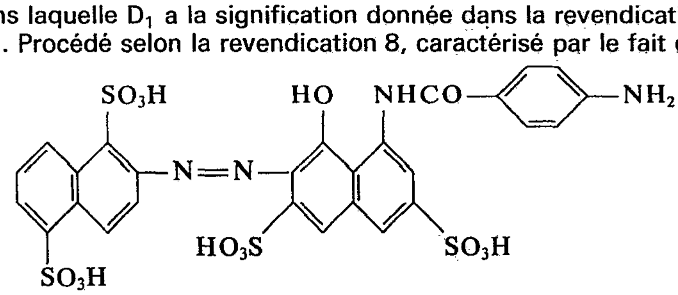

(7)